# EUROPEAN PATENT APPLICATION

(11) **EP 4 738 492 A1**
(43) Date of publication of application: **06.05.2026**
(21) Application number: 24209795.4
(22) Date of filing: 30.10.2024
(51) Int. Cl.: H01M 8/248, C25B 9/75, C25B 9/77

(54) **UNIT FOR A FUEL CELL OR ELECTROLYZER WITH VARIABLE CONTACT PRESSURE AND METHOD TO OPERATE THE UNIT**

(71) Applicant: Siemens Energy Global GmbH & Co. KG, 81739 München (DE)
(72) Inventor: Satheesh, Abhiroop, 91341 Röttenbach (DE)

(57) **Abstract**

The invention relates to an unit (40) with a cell (8), wherein the components of the cell (8) comprises at least: bipolar plates (BPP, 10), a cathodic GDLK (1), a anodic GDKLA (2), a MEA (3) in between, which (1, 2, 3) are framed in a cell frame (4), wherein this cell frame (4) is located between and to be compressed by two end plates (5', 55, 55'). wherein tie rods (66) are used to compress the cell (8) between the end plates (5', 55, 55') wherein a movable block (34) is present, which faces the cell (8), wherein the movable block (34) is able to compress the components of the cell (8).

## Description

The invention relates to unit comprising a cell design with variable contact pressure usable in electrolyzers or fuel cells and a method to operate an unit.

An electrolyzer or fuel cell design comprises in an unit a cell held together between two endplates through tie rods. The tie rods, with the help of the endplates, compress the cell frame and inner components, like GDL's (Gas Diffusion Layer) and MEA (Membrane Electrode Assembly).

The electric potential is usually applied to the endplates. For the efficient functioning of the cell there should be proper electrical contact between the GDL's and the MEA. Less contacting pressure could lead to underperformance whereas non-uniform contact pressure may lead increased local current densities thereby can lead to higher degradation of the MEA. As a result, the quantification of influence of MEA - GDL contact pressure is crucial in the cell design and development and operating.

WO 2008/089553 A1 discloses a single cell electrolyzer stack comprising: a top endplate and a bottom endplate; a plurality of fuel cells arranged on top of one another between the top endplate and the bottom endplate, each cell having a membrane electrode assembly between two electrically conductive flow field plates; and a compression system embedded within the single cell electrolyzer comprising at least one compressive plate, for maintaining a substantially constant pressure between the electrolyzers during stack operation.

It is therefore aim of the invention to overcome the problem.

The problem is solved by an unit according to claim 1 and method to operate according to claim 12.

In the dependent claims, further advantages are listed, which can be arbitrarily combined with each other to yield further advantages.

The figures and the description are only some embodiments of the invention.

It shows
figure 1 a cell design according to the state of the art,
figure 2 a cell compressed by endplates according to the state of the art, and
figure 3 an inventive unit,
figure 4 a screw unit and
figure 5 a modified endplate.

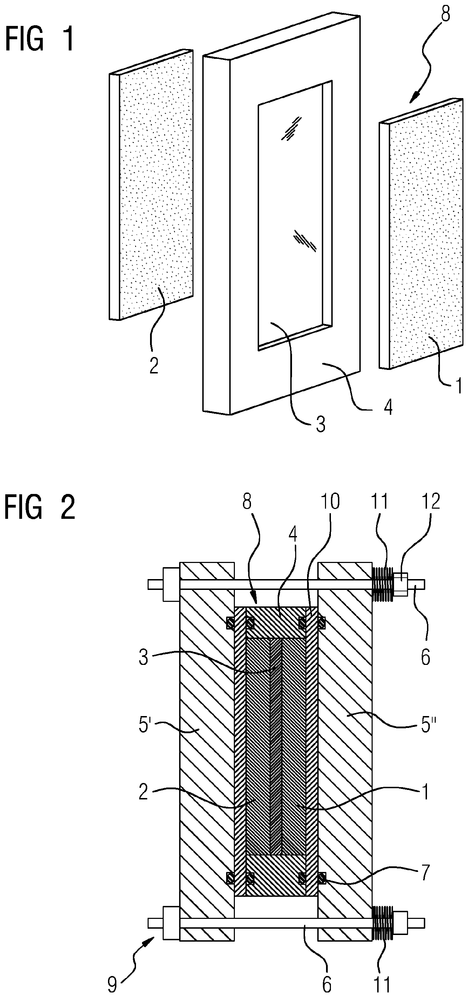

Figure 1 shows some elementary cell components of a cell 8. The components of the cell 8 comprises the GDL's cathodic GDLK 1 and anodic GDLA 2 and a MEA 3 in between. GDLK 1, GDLA 2 and MEA 3 are framed by a cell frame 4.

Figure 2 shows how the cell components 1, 2, 3, 4 of figure 1 are pressed together according to the state of the art.

A design 9 comprises the cell 8 held together between two endplates 5', 5" through tie rods 6.

The tie rods 6, with the help of the endplates 5', 5" and especially springs 11, compress the cell frame 4 and cell components GDL's 1, 2, MEA 3.

Preferably springs 11 are located between endplate 5' or 5" and a nut 12 screwed on the tie rod 6.

The springs 11 are provided to compensate changes in the pretension in the event of thermal expansion or creep setting.

Furthermore, there is a sealing 7 between the cell components and the endplates 5', 5".

A BPP 10 (Current Collector) is covering also the cell frame 4 on both sides between the endplates 5', 5".

The electric potential is usually applied to the endplates 5', 5'' or the BPP 10.

To prevent a short circuit, insulating washers are provided in the assembly of the tie rods.

Alternatively, insulating sheets can be incorporated between the current collector 10 and endplates (5' and 5'') when the electrical connection is applied to current collector / BPP 11 instead of endplates 5', 5".

For the efficient functioning of the cell 8, there should be a proper electrical contact between the GDL's 1, 2 and the MEA 3.

Less contacting pressure could lead to underperformance, whereas non-uniform contact pressure may lead to increased local current densities, leading to local temperature hotspots, thereby potentially causing higher electrochemical degradation of the MEA 3.

Contrary, a too high contact pressure would result in mechanical damage/rupture of the membrane.

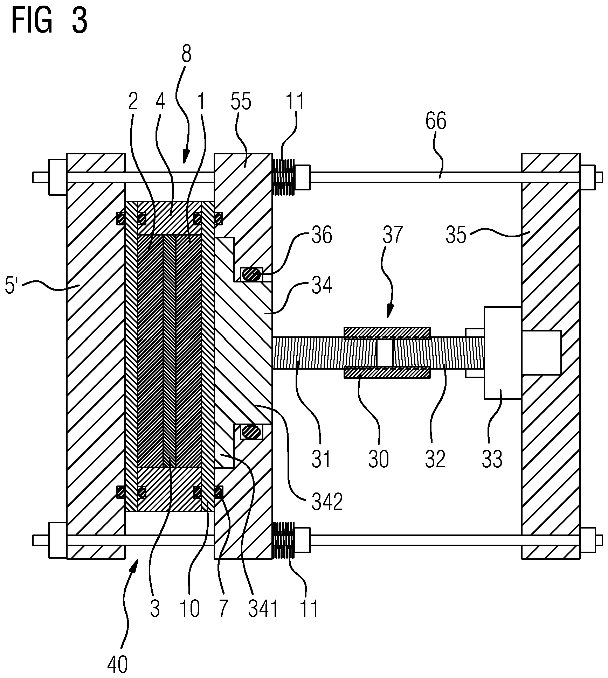

The current proposal to be seen in figure 3 aims to provide an unit 40 that allows to set a predefined and adjustable value of contact pressure between MEA 3 and GLD's 1, 2.

The new proposal aims to introduce a design for an unit 40 that facilitates the establishment of a predefined and adjustable value for the contact pressure between the MEA 3 and GDL's 1,2, thereby enabling the evaluation of performance.

This unit 40 incorporates a third endplate 35 to ensure adequate compression of the cell components.

The third endplate 35 is connected to the two other endplates 5', 55 by elongated tie rods 66.

Additionally, the endplate 55 of figure 2 (5'') - the one which faces the third endplate 35 - is modified.

The endplate 55 is more a frame with frames a movable block 34.

The movable block 34 is able to apply direct pressure to the internal components of the cell 8 by pushing apart the endplates. The movable block 34 covers the whole cross section of the cell components, but not the cell frame 4.

The moveable block 34 is preferably sealed by sealing rings 36 against the endplate 55.

The movable block 34 has preferably a T-shaped form.

The T-shape comprises a T-head 341 and a T-neck 342.

The second endplate 55 has therefore a recess which has the complementary shape, e.g. T-shape of the movable block 34. Movable block 34 and second endplate 55 have together the same shape as the second endplate 5" figure 2,

The movement of this moveable block 34 is facilitated by a manually operated pressure unit, preferably a screw unit 37. The screw unit 37 is fixed between the moveable block 34 and the third endplate 35.

The movable block 34 presses on the BPP 10.

This unit 40 allows application of pressure to the internal components through a moving block 34.

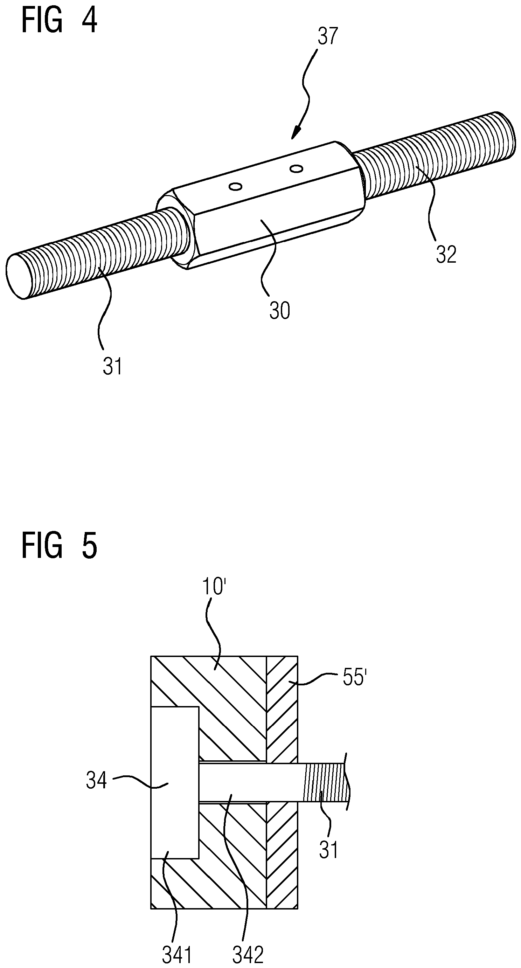

The movement of moveable block 34 is enabled by the screw unit 37 using components like a rotatable or hexagonal body 30, left handed thread 31 and right handed thread 32 shown in figure 4.

The outer shape of the body 30 is not restricted to an hexagon. The hexagonal shape is provided for the flexible operation using standard spanners or wrenches.

Figure 5 shows another alternative to figure 3.

The movable block 34 is mostly incorporated in a modified BPP 10' .

The endplate 55' has only an hole for the T-neck 342 and the

T-head 341 is incorporated into the modified BPP 10'.

To measure the force exerted by the moving block 34 (and thus on the internal cell components), a load cell 33 is preferably attached at the end between screw unit 37 and third end plate 35.

Moreover, another possible location of the load cell is between the movable block 34 and left-handed thread 3.

The operation of the unit 40 is as follows: When the hexagonal part 30 of the screw unit is rotated, it causes the two threads 31, 32 to move away from or towards the center due to the opposite threads. This results in an increase or decrease in the effective length of the unit 40.

Furthermore, the initial state of the unit 40 is set to the shortest length. Then, the rotation of the hexagonal body 30 would result in the movement of the moveable block 34 and lead to an increase in contact pressure.

Design Features of the unit 40 are:
Contact pressure controlled by a single part: The contact pressure solely depends on the rotation of the hexagonal body, making it easier to precisely control the force.

An alternative solution could involve replacing parts 30, 31, and 32 with a single solid rod, and adjusting the contact pressure by tightening or loosening the tie rods.

Another alternative design would be a single nut and bolt arrangement (replacing 30, 31, and 32).

In the proposed design in figure 3, the rotation is confined to the hexagonal body 30 and the parts 31 and 32 have only translation motion.

Advantages:
1. Cost-effective design: The design does not require any specialized parts such as hydraulics, pneumatics, or bearings, making it cost-effective.
2. Precise control of force/contact pressure with one input, i.e., the motion of the hexagonal body.
3. Simple design: The design keeps usage very simple, i.e., it does not require any sophisticated hydraulic or pneumatic controllers.
4. Minimal maintenance: The design is purely mechanical, thus requiring minimal maintenance of the unit 40.

## Claims

1. Unit (40)
with a cell (8),
wherein the components of the cell (8) comprises at least:
bipolar plates (BPP, 10)
a cathodic GDLK (1),
a anodic GDKLA (2),
a MEA (3) in between,
which (1, 2, 3) are framed in a cell frame (4),
wherein this cell frame (4) is located between and to be compressed by two end plates (5', 55, 55').
wherein tie rods (66) are used to compress the cell (8) between the end plates (5', 55, 55'),
**characterized by** that
a movable block (34) is present,
which faces the cell (8),
wherein the movable block (34) is able to compress the components of the cell (8).

2. Unit according to claim 1,
wherein the movable block (34) is embedded in an end plate (55).

3. Unit according to claim 1,
wherein the movable block (34) is embedded with his T-head (341) in a modified BPP (10').

4. Unit according to any of the claims 1, 2 or 3,
wherein the movable block (34) compresses the components of the cell (8) by a manually operable pressure unit, especially a screw unit (37),
which is fixed between the movable block (34) and a third end plate (35).

5. Unit according to claim 4,
wherein the three end plates (5', 55, 35) are parallel to each other.

6. Unit according to one or more of the claims 1, 2, 3, 4 or 5,
wherein the cell frame (4) is made of a compressible material,
especially a plastic polymer.

7. Unit according to any of the previous claims,
wherein a load cell (33) is arranged between the pressure unit or the screw unit (37) and the third end plate (35).

8. Unit to any of the previous claims,
wherein sealings layers are arranged between the cell (8) and the two end plates (5', 55, 55').

9. Unit according to one or more of the claims 4 to 8,
wherein three end plates (5', 55, 55', 35) are pressed together tie rods (66).

10. Unit according to any of the previous claims,
wherein sealings (36) are arranged between the movable block (34) and the end plate (55).

11. Unit according to any of the previous claims,
wherein sealings (7) are arranged between the cell (8) and the end plates (5', 55, 55').

12. Method to operate a unit (40) according to any of the preceding claims,
wherein the rotatable or hexagonal part (30) of the screw unit (37) is rotated to cause the two threads (31, 32) to move away from or towards the center due to the opposite threads.
